# EUROPÄISCHE PATENTSCHRIFT

(11) **EP 2 523 273 B1**
(45) Veröffentlichungstag und Bekanntmachung des Hinweises auf die Patenterteilung: **17.10.2018**
(21) Anmeldenummer: 12002372.6
(22) Anmeldetag: 30.03.2012
(51) Int. Cl.: H01R 27/02, H01R 103/00, H01R 24/78, H01R 13/66

(54) **Unterputz-Steckdose**
Wall outlet
Prise électrique encastrée

(30) Priorität: 12.05.2011 DE 102011101385
(43) Veröffentlichungstag der Anmeldung: 14.11.2012
(73) Patentinhaber: ABB AG, 68309 Mannheim (DE)
(72) Erfinder: Diehl, Sven, 57078 Siegen (DE); Ewers, Manfred, 58239 Schwerte (DE)

(56) Entgegenhaltungen:
- EP-A1- 2 161 794
- DE-A1-102009 037 751
- DE-B3-102007 018 177
- DE-U1-202010 007 072
- US-A1- 2009 315 509

## Beschreibung

Die Erfindung betrifft eine Unterputz-Steckdose, beispielsweise Unterputz-Schuko-Steckdose.

In zunehmendem Maße dient der USB-Anschluss als Standard-Anschluss zum Aufladen der Akkumulatoren von mobilen Audio- oder Kommunikationsgeräten, z. B. Mobilfunktelefonen und MP3-Player, nachfolgend auch als USB-Geräte bezeichnet.

Aus der DE 10 2009 017 265 A1 ist ein elektrisches Installationsgerät mit Ladegerät für ein Mobiltelefon bekannt, mit einem in Form eines Unterputz-Gerätes ausgebildeten und in eine handelsübliche Unterputzdose montierbaren Gerätesockel, welcher ein Ladegerät und einen elektrischen Anschluss für ein Wechselspannungsnetz aufweist. Das elektrische Installationsgerät weist frontseitig eine taschenförmige Abdeckung zum senkrechten Einstecken eines Mobiltelefons auf. Im Bodenbereich des durch die Abdeckung geschaffenen Innenraums ist ein Podest mit einer Anschlussschnittstelle für die Kontaktierung der Ladeanschlusssteckbuchse des Mobiltelefons angeordnet. Die Anschlussschnittstelle kann in Form einer Micro-USB-Standard-Schnittstelle ausgebildet sein.

Aus der DE 10 2009 021 449 A1 ist ein ähnliches elektrisches Installationsgerät mit Ladegerät für ein Mobiltelefon bekannt, bei welchem frontseitig des Gerätesockels ein Ladeanschlussstecker für den Anschluss eines Mobiltelefons und ein Universalhalter für die Ablage/Halterung dieses Mobiltelefons vorgesehen sind. Der Ladeanschlussstecker kann in Form einer Micro-USB-Standard-Schnittstelle ausgebildet sein.

Aus der DE 10 2009 037 751 A1 ist ein ähnliches elektrisches Installationsgerät mit Ladegerät für ein Mobiltelefon bekannt, bei welchem frontseitig des Gerätesockels eine USB-Ladeanschlusssteckbuchse für den Anschluss eines USB-Ladeanschlusssteckers eines USB-Gerätes vorgesehen ist, wobei ein mechanischer EIN/AUSSchalter zwischen dem elektrischen Anschluss für ein Wechselspannungsnetz und dem Eingang des Ladegerätes angeordnet ist.

Der Erfindung liegt die Aufgabe zugrunde, eine Unterputz-Steckdose derart zu ertüchtigen, dass der elektrische Anschluss eines mobilen Audio- oder Kommunikationsgerätes, z. B. eines Mobilfunktelefons oder MP3-Players, möglich ist.

Diese Aufgabe wird erfindungsgemäß gelöst durch eine Unterputz-Steckdose entsprechend dem Anspruch 1.

Die mit der Erfindung erzielbaren Vorteile bestehen insbesondere darin, dass aufgrund der unmittelbaren Integration eines Netzteils in eine Unterputz-Steckdose und der frontseitig zugänglichen Integration eines elektrisch mit diesem Netzteil verbundenen USB-Anschlusses ein USB-Stecker oder eine USB-Buchse eines USB-Gerätes einsteckbar ist, worauf die Akkumulatoren dieses USB-Gerätes aufgeladen werden können. Gleichzeitig kann selbstverständlich ein üblicher Stecker, beispielsweise Schuko-Stecker im Steckdosentopf eingesteckt sein.

Dabei wird die Tiefe einer Standard-Steckdose durch die zusätzliche Montage eines Netzteilmoduls nur in dem Maße erhöht, dass nach wie vor handelsübliche UP-Gerätedosen für die Installation verwendet werden können.

Vorteilhaft ist das Netzteilmodul als Ergänzungsmodul für einen Standard-Steckdosensockel ausgebildet, so dass ein- und derselbe Steckdosensockel einer Standard-Steckdose verwendet werden kann, um vor Ort unter Verwendung eines "Baukastensystems/Bausatz" mit Steckdosensockeln, Netzteilmoduln und zwei unterschiedlichen Zentralscheiben mit/ohne Öffnung für den USB-Anschluss wahlweise eine Unterputz-Steckdose mit oder ohne zusätzlichen USB-Anschluss erstellen zu können:
- Soll eine Unterputz-Steckdose mit zusätzlichem USB-Anschluss erstellt werden, verwendet der Installateur die erfindungsgemäß ausgebildete Zentralscheibe mit der zusätzlichen Öffnung für den USB-Anschluss und montiert ein Netzteilmodul an der Rückseite des Steckdosensockels. Die elektrische Kontaktierung zwischen Netzteilmodul und Steckdosensockel erfolgt "automatisch" durch Eingriff der Kontaktfedern des Netzteilmoduls in die Kontaktierungsöffnungen der Klemmenkammern des Steckdosensockels.
- Soll eine Unterputz-Steckdose ohne zusätzlichen USB-Anschluss erstellt werden, verwendet der Installateur eine Standard-Zentralscheibe ohne zusätzliche Öffnung für den USB-Anschluss für die Montage mit dem Steckdosensockel.

Alternativ hierzu ist es selbstverständlich auch möglich, die Steckdose mit USB-Anschluss als Komplettgerät und nicht als "Bausatz" anzubieten, d. h. das Modulgehäuse wird bereits werkseitig auf den Steckdosensockel verrastet.

Vorteilhafte Ausgestaltungen der Erfindung sind in dem Unteranspruch gekennzeichnet.

Die Erfindung wird nachstehend anhand der in der Zeichnung dargestellten Ausführungsbeispiele näher erläutert. Es zeigen:
- Fig. 1: eine perspektivische "Explosionsansicht" auf eine Zentralscheibe, einen Steckdosensockel und ein Netzteilmodul einer Unterputz-Steckdose,
- Fig. 2: einen Schnitt durch einen mit einem Netzteilmodul bestückten Steckdosensockel,
- Fig. 3: eine Sicht auf einen mit einer Zentralscheibe und einem Netzteilmodul bestückten Steckdosensockel,
- Fig. 4: eine weitere perspektivische "Explosionsansicht" auf eine Zentralscheibe, einen Steckdosensockel und ein Netzteilmodul einer Unterputz-Steckdose,
- Fig. 5: eine perspektivische Sicht auf die Rückseite eines mit Zentralscheibe bestückten Steckdosensockels vor der Montage eines Netzteilmoduls,
- Fig. 6: eine perspektivische Ansicht eines mit einer Zentralscheibe und einem Netzteilmodul bestückten Steckdosensockels,
- Fig. 7: eine Seitenansicht eines mit einer Zentralscheibe und einem Netzteilmodul bestückten Steckdosensockels.

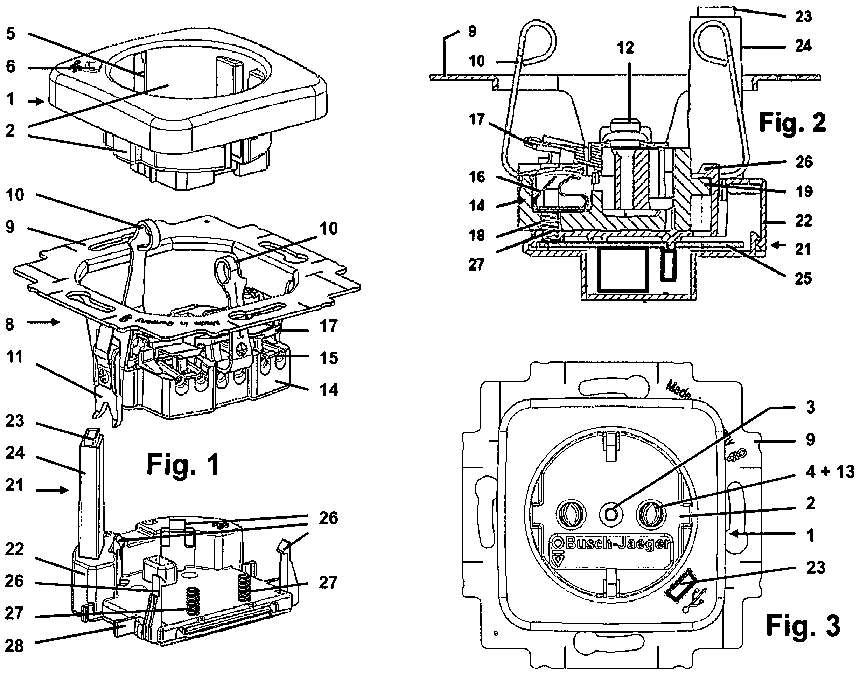

In Fig. 1 ist eine perspektivische "Explosionsansicht" auf eine Zentralscheibe, einen Steckdosensockel und ein Netzteilmodul einer Unterputz-Steckdose dargestellt. Dabei sind insbesondere zu erkennen:
- eine Zentralscheibe 1 einer Unterputz-Steckdose mit einem Steckdosentopf 2, mit zwei Öffnungen 5 zur Aufnahme von Erdungsbügeln und mit einer neben dem Steckdosentopf 2 angeordneten Öffnung 6 für einen USB-Anschluss,
- ein Steckdosensockel 8 mit einem Tragring 9, zwei Erdungsbügeln 10 und zwei Spreizen 11 zur Installation des Sockels in einer normgerechten UP-Gerätedose (Unterputz), sowie mit drei schraubenlosen Klemmen 14 inklusive Klemmenkammern mit Leitungs-Einführöffnungen 15 für die externe Verdrahtung (insbesondere für den Phasenleiter und den Nulleiter eines 230V-Wechselspannungsnetzes sowie den Schutzleiter) und zugeordneten Federlösern 17, welche zu betätigen sind, falls eine in eine schraubenlose Klemme bereits eingeführte Leitung wieder entfernt werden soll,
- ein Netzteilmodul 21 mit einem Modulgehäuse 22 aus einem elektrisch isolierenden Kunststoff, welches einen Dom 24 auf seiner Oberseite aufweist, an dessen Endfläche ein USB-Anschluss 23 angeordnet ist, insbesondere ein Micro-USB-Stecker oder eine Micro-USB-Buchse, wobei das Netzteilmodul 21 mit insgesamt vier Rasthaken 26 für die Montage am Steckdosensockel 8 versehen ist, an seiner Oberseite zwei Kontaktfedern 27 zur elektrischen Kontaktierung mit korrespondierenden elektrischen Kontakten des Steckdosensockels 8 aufweist und Spreizen-Halterungen 38 zur Arretierung der Spreizen 11 besitzt.

In Fig. 2 ist ein Schnitt durch einen mit einem Netzteilmodul bestückten Steckdosensockel dargestellt. Es ist zu erkennen, dass im Innenraum des Modulgehäuses 22 des Netzteilmoduls 21 eine Leiterplatte 25 vorgesehen ist, welche insbesondere zur Montage und zum elektrischen Anschluss von Bauelementen eines Netzteils / Ladegeräts (Universalladegerät) inklusive Transformator dient. Die in elektrischem Kontakt mit Leiterbahnen der Leiterplatte 25 stehenden Kontaktfedern 27 greifen durch Kontaktierungsöffnungen 18 der Klemmenkammern der schraubenlosen Klemmen 14 und treten im Innenraum dieser Klemmenkammern der schraubenlosen Klemmen 14 in Kontakt mit zur Leitungsbefestigung dienenden Klemmfedern 16. Diese Klemmfedern 16 üben auf durch die Leitungs-Einführöffnungen 15 in die Klemmenkammern der schraubenlosen Klemmen 14 eingeführte Leitungen einen Anpressdruck aus, wodurch die elektrische Kontaktierung mit Polkontakten / Erdungskontakten der Steckdose erfolgt. Durch Druck auf die Federlöser 17 werden die Klemmfedern 16 zurückgedrückt, wodurch die eingeführten Leitungen freigegeben werden und aus den Klemmenkammern der schraubenlosen Klemmen 14 herausgezogen werden können.

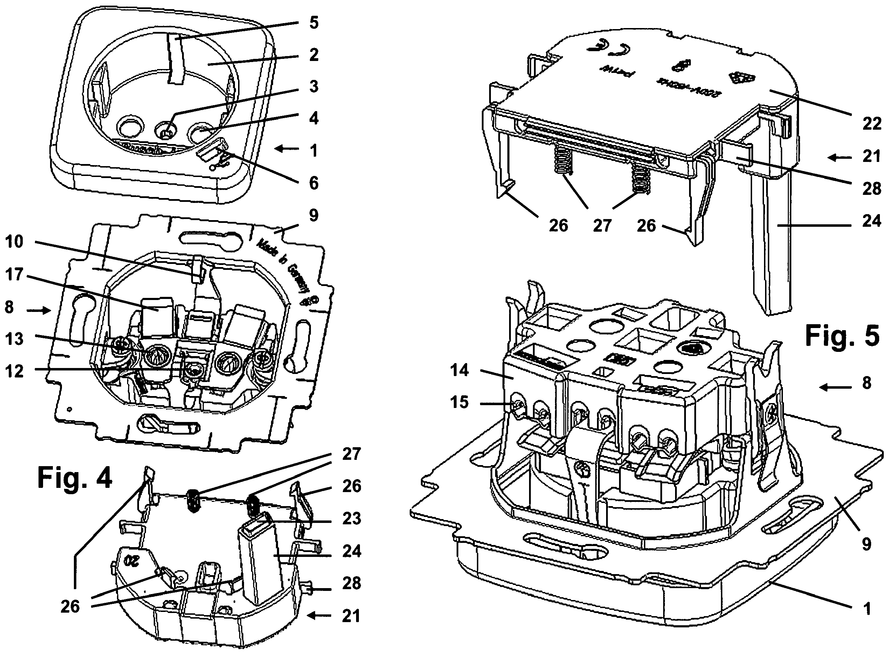

Fig. 2 zeigt des Weiteren den Tragring 9, die Erdungsbügel 10 und ein zentral im Steckdosensockel 8 angeordnetes Gewinde 12 für die Aufnahme einer Zentralschraube, welche durch eine Öffnung 3 der Zentralscheibe 1 - siehe hierzu die Figuren 3 und 4 - zu führen ist, um derart eine Befestigung der Zentralscheibe 11 am Steckdosensockel 8 zu bewirken. Insbesondere zeigt Fig. 2 die Montage des Netzteilmoduls 21 am Steckdosensockel 8, indem die vorstehend erwähnten Rasthaken 26 über korrespondierend hierzu angeordnete Rastkanten 19 des Steckdosensockels 8 greifen. Ferner ist der Dom 24 mit dem endseitig angeordneten USB-Anschluss 23 dargestellt. Dabei führen mit Leiterbahnen der Leiterplatte 25 verbundene elektrische Leitungen durch den Dom 24 zum USB-Anschluss 23.

In Fig. 3 ist eine Sicht auf einen mit einer Zentralscheibe und einem Netzteilmodul bestückten Steckdosensockel dargestellt. Dabei ist insbesondere die Lage des USB-Anschlusses 23 in einer frontseitigen Ecke der Zentralscheibe 1 am Rande des Steckdosentopfes 2 zu erkennen. Der Steckdosentopf 2 weist in allgemein bekannter Art und Weise die zentrale Öffnung 3 zur Aufnahme der erwähnten Zentralschraube sowie zwei Öffnungen 4 zur Aufnahme von Steckerstiften eines Steckers auf, welche die Polkontakte 13 - siehe hierzu Fig. 4 - des Steckdosensockels 8 kontaktieren.

In Fig. 4 ist ergänzend zur Fig. 1 eine weitere perspektivische "Explosionsansicht" auf eine Zentralscheibe, einen Steckdosensockel und ein Netzteilmodul einer Unterputz-Steckdose dargestellt, wobei der perspektivische Blickwinkel verändert ist, um weitere Details zu zeigen. Zusätzlich zu Fig. 1 sind
- bei der Zentralscheibe 1 deren Öffnung 3 zur Aufnahme der Zentralschraube sowie die beiden Öffnungen 4 zur Aufnahme von Steckerstiften eines Steckers,
- beim Steckdosensockel 8 das Gewinde 12 zur Aufnahme der erwähnten Zentralschraube sowie die beiden Polkontakte 13
zu erkennen.

In Fig. 5 ist eine perspektivische Sicht auf die Rückseite eines mit Zentralscheibe 1 bestückten Steckdosensockels vor der Montage eines Netzteilmoduls dargestellt. Beim Steckdosensockel 8 sind der Tragring 9 und die drei schraubenlosen Klemmen 14 mit ihren Leitungs-Einführöffnungen 15 bezeichnet. Beim Netzteilmodul 21 sind zwei der vorzugsweisen vier Rasthaken 26, die beiden Kontaktfedern 27 sowie der Dom 24 des Modulgehäuses 22 bezeichnet.

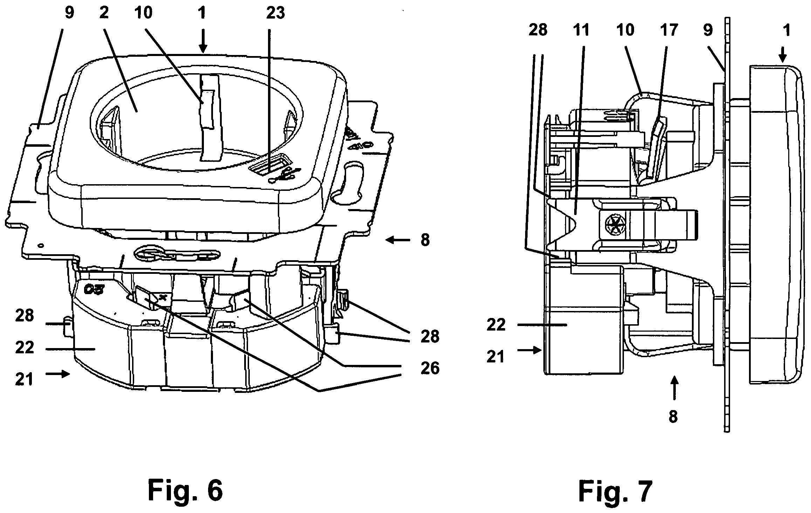

In Fig. 6 ist eine perspektivische Ansicht eines mit einer Zentralscheibe und einem Netzteilmodul bestückten Steckdosensockels dargestellt. Es sind die Zentralscheibe 1 mit Steckdosentopf 2 und USB-Anschluss 23, der Steckdosensockel 8 mit Tragring 9 und Erdungsbügel 10 sowie das Netzteilmodul 21 mit Modulgehäuse 22, Rasthaken 26 und Spreizen-Halterungen 28 zu erkennen. Die Spreizen-Halterungen bewirken, dass die Spreizen 11 vor der Montage der Steckdose in einer UP-Gerätedose auch ohne zusätzliche Haltemittel zuverlässig in einer "Ruheposition arretiert sind.

In Fig. 7 ist eine Seitenansicht eines mit einer Zentralscheibe 1 und einem Netzteilmodul 21 bestückten Steckdosensockels 8 dargestellt, wobei der Tragring 9, die Erdungsbügel 10, ein Federlöser 17 und eine mittels Spreizen-Halterung 28 arretierte Federspreize 11 bezeichnet sind.

Selbstverständlich wird die vorgeschlagene Unterputz-Steckdose - wie bei Unterputz-Installationsgeräte-Programmen allgemein üblich - durch einen Abdeckrahmen komplettiert. Somit ist ein formschöne Einbindung/Integration in ein Installationsgeräte-Programm respektive Schalter- und Steckdosenprogramm sowie eine Kombination mit weiteren Geräten, beispielsweise Schaltern/Tastern/Dimmern/Steckdosen, dieses Schalter- und Steckdosenprogramms möglich, beispielsweise unter Einsatz von 2fach-Rahmen, 3fach-Rahmen usw.

### Bezugszeichenliste

- 1: Zentralscheibe einer Unterputz-Steckdose
- 2: Steckdosentopf
- 3: Öffnung für Zentralschraube
- 4: Öffnungen für Steckerstifte
- 5: Öffnungen für Erdungsbügel
- 6: Öffnung für USB-Anschluss
- 7: -
- 8: Steckdosensockel
- 9: Tragring
- 10: Erdungsbügel
- 11: Spreizen
- 12: Gewinde für Zentralschraube
- 13: Polkontakte
- 14: schraubenlose Klemmen mit Klemmenkammern
- 15: Leitungs-Einführöffnung
- 16: Klemmfeder für Leitungsbefestigung
- 17: Federlöser
- 18: Kontaktierungsöffnungen der Klemmenkammern
- 19: Rastkante
- 20: -
- 21: Netzteilmodul für die Energieversorgung/Aufladung eines mobilen Audio- oder Kommunikationsgerätes
- 22: Modulgehäuse
- 23: USB-Anschluss (insbesondere Micro-USB-Stecker oder Micro-USB-Buchse)
- 24: Dom
- 25: Leiterplatte des Netzteils / Ladegeräts
- 26: Rasthaken
- 27: Kontaktfedern zur elektrischen Kontaktierung
- 28: Spreizen-Halterung

## Patentansprüche

1. Unterputz-Steckdose
• mit einer einen Steckdosentopf (2) aufweisenden Zentralscheibe (1),
• mit einem mit der Zentralscheibe (1) verbundenen Steckdosensockel (8), an dessen Bodenseite ein separates Netzteilmodul (21) für die Energieversorgung/Aufladung eines mobilen Audio- oder Kommunikationsgerätes montierbar ist,
• wobei das Netzteilmodul (21) ein Modulgehäuse (22) aus einem elektrisch isolierenden Kunststoff mit einem Dom (24) aufweist, an dessen Endfläche ein USB-Anschluss (23) angeordnet ist, welcher über eine in der Zentralscheibe (1) neben dem Steckdosentopf (2) eingebrachte Öffnung (6) extern zugänglich ist,
• wobei Kontaktfedern (27) des Netzteilmoduls (21) in Kontaktierungsöffnungen (18) von Klemmenkammern der am Steckdosensockel (8) befindlichen Klemmen (14) für die externe Verdrahtung mit dem Phasenleiter und dem Nullleiter eines 230V-Wechselspannungsnetzes greifen,
• wobei das Netzteilmodul (21) mittels mehrerer Rasthaken (26) / Rastkanten (19) - Verbindungen am Steckdosensockel (8) befestigt ist,
• wobei im Modulgehäuse (22) des Netzteilmoduls (21) eine Leiterplatte (25) eines Netzteiles vorgesehen ist, welche zur Montage und zum elektrischen Anschluss von Bauelementen des Netzteils Ladegeräts dient, wobei die Kontaktfedern (27) in elektrischem Kontakt mit Leiterbahnen dieser Leiterplatte (25) stehen, die in elektrischem Kontakt mit Leiterbahnen der Leiterplatte (25) stehenden Kontaktfedern (27) durch die Kontaktierungsöffnungen (18) der Klemmenkammern der Klemmen (14) greifen und treten im Innenraum dieser Klemmenkammern der schraubenlosen Klemmen (14) in Kontakt mit zur Leitungsbefestigung dienenden Klemmfedern (16), wobei mit den Leiterbahnen der Leiterplatte (25) verbundene elektrische Leitungen durch den Dom (24) zum USB-Anschluss (23) führen.

2. Unterputz-Steckdose nach Anspruch 1, **dadurch gekennzeichnet, dass** das Netzteilmodul (21) Spreizen-Halterungen (28) für die Arretierung von Spreizen (11) des Steckdosensockels (8) in einer "Ruheposition" aufweist.

## Claims

1. Flush-mounted plug socket
• having a central plate (1) having a plug socket receptacle (2),
• having a plug socket base (8) connected to the central plate (1), on the bottom side of which plug socket base a separate power supply unit module (21) can be mounted for the supply of energy to/charging of a mobile audio or communication device,
• wherein the power supply unit module (21) has a module housing (22) composed of an electrically insulating plastic having a dome (24), on the end surface of which a USB port (23) is arranged, which USB port is accessible from the outside by means of an opening (6) introduced in the central plate (1) next to the plug socket receptacle (2),
• wherein contact springs (27) of the power supply unit module (21) engage into contact-making openings (18) of terminal chambers of the terminals (14), which are located on the plug socket base (8), for the external wiring to the phase conductor and to the neutral conductor of a 230-V AC voltage network,
• wherein the power supply unit module (21) is secured to the plug socket base (8) by means of a plurality of latching hook (26)/latching edge (19) connections,
• wherein a printed circuit board (25) of a power supply unit is provided in the module housing (22) of the power supply unit module (21), which printed circuit board serves for mounting and electrically connecting components of the power supply unit/charging device, wherein the contact springs (27) are in electrical contact with conductor tracks of said printed circuit board (25), the contact springs (27) in electrical contact with conductor tracks of the printed circuit board (25) engage through the contact-making openings (18) of the terminal chambers of the terminals (14) and, in the interior of said terminal chambers of the screw-less terminals (14), enter into contact with terminal springs (16) serving for securing conductors, wherein electrical lines connected to the conductor tracks of the printed circuit board (25) lead through the dome (24) to the USB port (23).

2. Flush-mounted plug socket according to Claim 1, **characterized in that** the power supply unit module (21) has spreader holders (28) for arresting spreaders (11) of the plug socket base (8) in a "rest position".

## Revendications

1. Prise électrique à montage encastré,
* comprenant une plaque centrale (1) qui possède un pot de prise électrique (2),
* comprenant un socle de prise électrique (8) relié à la plaque centrale (1), au niveau du côté du fond duquel peut être monté un module d'alimentation secteur (21) séparé pour l'alimentation en énergie / la charge d'un appareil audio ou de communication,
* le module d'alimentation secteur (21) possédant un boîtier de module (22) en une matière plastique électriquement isolante muni d'un dôme (24) au niveau de la surface d'extrémité duquel est disposée une prise USB (23), laquelle est accessible depuis l'extérieur par le biais d'une ouverture (6) pratiquée dans la plaque centrale (1) à côté du pot de prise électrique (2),
* des ressorts de contact (27) du module d'alimentation secteur (21) venant en prise dans des ouvertures de mise en contact (18) d'alvéoles de bornes des bornes (14) qui se trouvent sur le socle de prise électrique (8) pour le câblage externe avec le conducteur de phase et le conducteur de neutre d'un réseau de tension alternative à 230 V,
* le module d'alimentation secteur (21) étant fixé au socle de prise électrique (8) au moyen de liaisons par crochets d'enclipsage (26) / bords d'enclipsage (19),
* un circuit imprimé (25) d'une alimentation secteur se trouvant dans le boîtier de module (22) du module d'alimentation secteur (21), lequel sert au montage et au branchement électrique de composants de l'alimentation secteur / du chargeur, les ressorts de contact (27) se trouvant en contact électrique avec les pistes conductrices de ce circuit imprimé (25), les ressorts de contact (27) qui se trouvent en contact électrique avec les pistes conductrices du circuit imprimé (25) passant à travers les ouvertures de mise en contact (18) des alvéoles de bornes des bornes (14) et, dans l'espace intérieur de ces alvéoles de bornes des bornes (14) sans vis, entrant en contact avec des ressorts de serrage (16) servant à la fixation du câble, les câbles électriques reliés aux pistes conductrices du circuit imprimé (25) passant à travers le dôme (24) vers la prise USB (23).

2. Prise électrique à montage encastré selon la revendication 1, **caractérisée en ce que** le module d'alimentation secteur (21) possède des éléments de maintien d'extenseur (28) pour le blocage des extenseurs (11) du socle de prise électrique (8) dans une « position de repos ».
